# EUROPEAN PATENT APPLICATION

(11) **EP 4 140 957 A1**
(43) Date of publication of application: **01.03.2023**
(21) Application number: 22158666.2
(22) Date of filing: 24.02.2022
(51) Int. Cl.: C01G 53/00, H01M 4/525

(54) **POSITIVE ACTIVE MATERIAL PRECURSOR FOR RECHARGEABLE LITHIUM BATTERY, METHOD FOR PREPARING POSITIVE ACTIVE MATERIAL USING THE PRECURSOR, AND POSITIVE ACTIVE MATERIAL FOR RECHARGEABLE LITHIUM BATTERY**

(30) Priority: 24.08.2021 KR 20210111594; 15.10.2021 KR 20210137718
(71) Applicant: Samsung SDI Co., Ltd., Yongin-si, Gyeonggi-do 17084 (KR)
(72) Inventor: KONG, Youngsun, 17084 Yongin-si (KR); KANG, Seok Mun, 17084 Yongin-si (KR); SEONG, Wonmo, 17084 Yongin-si (KR); JUN, Dowook, 17084 Yongin-si (KR); HASE, Naoyuki, 17084 Yongin-si (KR)
(74) Representative: Marks & Clerk LLP

(57) **Abstract**

Disclosed are a positive active material precursor for a rechargeable lithium battery, a method for preparing the positive active material using the same, and a positive active material for a rechargeable lithium battery. The positive active material precursor for a rechargeable lithium battery in a form of a coreshell particle includes a core and a shell surrounding the core, the core includes a nickel-manganese-based composite hydroxide containing nickel and manganese, the shell includes a nickel-manganese-based composite hydroxide containing nickel, manganese, and a pillar element, the pillar element includes at least one selected from the group consisting of Al, Mo, Ti, W, and Zr.

## Description

### BACKGROUND

### 1. Field

A positive active material precursor for a rechargeable lithium battery, method for preparing the positive active material using the same, and a positive active material for a rechargeable lithium battery are disclosed.

### 2. Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive active materials have been investigated to realize rechargeable lithium batteries for applications to the uses. Among them, ternary positive active materials such as nickel-cobalt-manganese, nickel-cobalt-aluminium, or the like are generally used to secure high capacity, high stability, a long cycle-life, and the like. However, as a demand for positive active materials for electric vehicles and the like has recently increased rapidly, since positive active materials containing cobalt, a rare metal, are expected to suffer an insufficient supply, a demand for positive active materials with no cobalt or a trace amount of cobalt is increasing. However, since the cobalt plays a key role in the structure of the positive active materials, when the cobalt is removed or reduced therefrom, structural defects may occur and thus increase resistance or deteriorate a cycle-life, deteriorating performance such as capacity and efficiency.

In general, commonly-known cobalt-free positive active materials do not have a layered structure but have an olivine-based or spinel structure. Cobalt-free positive active materials with the layered structure exhibit deteriorated capacity and performance, compared with the cobalt-containing positive active materials, and thus do not draw much attention but are not commercially available. Particularly, in nickel-manganese layered positive active materials, since nickel ions maintain Ni²⁺, performance and stability tend to be deteriorated. Accordingly, various researches and developments are required for a positive active material including no cobalt metal or a trace amount of cobalt metal and having the layered structure.

### SUMMARY

An embodiment provides a positive active material precursor firmly maintaining a nickel-manganese-based layered structure even after repeated charges and discharges and thus, securing structure stability and realizing excellent cycle-life characteristics for a long term and high capacity, a method for preparing the positive active material using the same, and a positive active material for a rechargeable lithium battery also using the same.

In an embodiment, a positive active material precursor for a rechargeable lithium battery in a form of a core-shell particle includes a core and a shell surrounding the core, wherein the core includes a nickel-manganese-based composite hydroxide containing nickel and manganese, the shell includes a nickel-manganese-based composite hydroxide containing nickel, manganese, and a pillar element, and the pillar element includes at least one selected from the group consisting of Al, Mo, Ti, W, and Zr.

In another embodiment, a method of preparing a positive active material for a rechargeable lithium battery includes mixing the positive active material precursor with a lithium raw material and performing heat treatment.

In another embodiment, a positive active material for a rechargeable lithium battery in a form of a core-shell particle includes a core and a shell surrounding the core, wherein the core includes a lithium-nickel-manganese-based composite oxide containing lithium, nickel, and manganese, the shell includes a lithium-nickel-manganese-based composite oxide containing lithium, nickel, manganese, and a pillar element, and the pillar element includes at least one selected from the group consisting of Al, Mo, Ti, W, and Zr.

At least some of the above and other features of the invention are set out in the claims.

The positive active material precursor for a rechargeable lithium battery according to an embodiment and the positive active material using the same may secure structural stability, since the nickel-manganese-based layered structure does not collapse but is firmly maintained even after repeated charges and discharges, and thus realize excellent cycle-life characteristics and high capacity.

### BRIEF DESCRIPTION OF THE DRAWINGS

FIG. 1 is a schematic view illustrating a rechargeable lithium battery according to an embodiment.
FIG. 2 is a scanning electron microscope (SEM) photograph of a cross-section of the positive active material precursor according to Example 1.
FIG. 3 is an SEM photograph of a cross-section of the positive active material according to Example 1.
FIG. 4 is an SEM photograph of a cross-section of a positive active material precursor according to Comparative Example 2.
FIG. 5 is an SEM photograph of a cross-section of the positive active material according to Comparative Example 2.
FIG. 6 is a graph of evaluation of high-temperature cycle-life characteristics for the battery cells of Examples and Comparative Examples.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "a combination thereof" refers to a mixture, a laminate, a composite, a copolymer, an alloy, a blend, a reaction product, and the like of constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter (D50) may mean the diameter of particles having a cumulative volume of 50 volume% in the particle size distribution.

### Positive Active Material Precursor

In an embodiment, a positive active material precursor for a rechargeable lithium battery in a form of a core-shell particle includes a core and a shell surrounding the core, wherein the core includes a nickel-manganese-based composite hydroxide containing nickel and manganese, the shell includes a nickel-manganese-based composite hydroxide containing nickel, manganese, and a pillar element, and the pillar element includes at least one selected from the group consisting of Al, Mo, Ti, W, and Zr.

Here, the pillar element may comprise Al, Mo, Ti, W, Zr, or a combination thereof, that is, the pillar element may comprise Al alone, Mo+Ti, Al+W+Zr, or the like.

The positive active material precursor may be mainly composed of the nickel-manganese-based layered structure and include no cobalt or a trace amount of cobalt. The positive active material may secure structural stability and improve capacity characteristics and cycle-life characteristics by introducing the pillar element serving as a pillar without being involved in charges and discharges into a crystal structure of a shell portion to make a surface layer where structural deterioration occurs structurally strong so that the layered structure may not collapse even after a long cycle.

The core may not contain the pillar element which includes at least one selected from the group consisting of Al, Mo, Ti, W, and Zr. When the pillar element is uniformly distributed inside the positive active material regardless of the core and the shell, the pillar element may not properly function as a pillar but are just mixed with other metal elements, wherein the pillar element may not sufficiently suppress collapse of the nickel-manganese-based layered structure according to the charges and discharges, thereby not securing structural stability of the positive active material and deteriorating capacity and cycle-life characteristics. On the other hand, the positive active material precursor according to an embodiment includes the pillar element in the shell alone but not in the core, and the positive active material using the same has the pillar element in the shell alone but no pillar element in the core, if ever, a trace amount of the pillar element, while the core/shell structure is maintained, improving capacity characteristics and cycle-life characteristics as well as firmly maintaining the nickel-manganese-based layered structure.

Conventionally, a method of adding a raw material of Al, Mo, Ti, W, Zr, and the like to a positive active material precursor and then, firing the mixture to prepare a positive active material doped with the raw material has been used. When the doping is performed in this way, doping elements are in general uniformly distributed in the crystal structure of the positive active material or not doped according to types or synthesis conditions of the doping elements but remain and are coated on the surface and thus have a coating effect. Herein, when a long cycle or a severe high voltage driving proceeds, since the crystal structure of the positive active material is more rapidly deteriorated, the doping elements or the coating elements may rapidly lose a crystal structure stabilization function and have no effect. On the contrary, the positive active material precursor according to an embodiment is a precursor in which a specific element serving as a pillar in the shell is introduced into the shell without doping or coating other elements later, and a positive active material prepared by using the same may be suppressed from degradation even after a long cycle-life or under severe high voltage driving and thus maintain a spherical shape but have no particle breakage or structural collapse. Particularly, only when this pillared structure is present in the shell alone rather than all over the inside of the active material, the structure may withstand contraction and expansion of the positive active material. A rechargeable lithium battery including this positive active material may exhibit excellent capacity retention and high temperature cycle-life characteristics.

The pillared structure refers to a structure that pillar elements are located in a portion of metal sites of the layered structure and may be called to be a pillared layered structure. This pillared structure may be a little rigid structure, and when this pillared structure is located in the shell, a phase transition may be suppressed during the charge and discharge, well maintaining the physical structure.

A thickness of the shell may be about 20% to about 50%, for example, about 20% to about 45%, about 20% to about 40%, about 25% to about 35%, about 30% to about 50%, about 33% to about 50%, or the like of a radius of the core-shell particle. This shell thickness distinguishes the positive active material of the present disclosure from a positive active material with a general core/shell structure but a very thin shell thickness. In other words, the pillared structure in the positive active material precursor may be present from the surface to a thickness portion corresponding to about 20% to about 50% of the core-shell particle radius. In the positive active material precursor, when a thickness of a pillared area taken by the pillared structure, that is, a thickness of the shell portion is further thinner or further thicker than the above range, structural collapse due to the charge and discharge may not be effectively suppressed, thereby deteriorating capacity characteristics, cycle-life characteristics, and the like. For example, when the thickness of the shell is less than about 20%, the compositions of the core and the shell may be mixed up and become uniform with each other, wherein the pillar elements may not function as pillars.

In the positive active material precursor, a difference between a molar concentration of nickel based on the total metal in the core and a molar concentration of nickel based on the total metal in the shell may be greater than or equal to about 0 mol% and less than or equal to about 40 mol%, for example greater than or equal to about 0 mol% to less than about 30 mol%, greater than or equal to about 0 mol% and less than or equal to about 20 mol%, about 0 mol% to about 15 mol%, about 0 mol% to about 10 mol%, or about 0.1 mol% to about 5 mol%.

In addition, a difference between a molar concentration of manganese based on the total metal in the core and a molar concentration of manganese based on the total metal in the shell may be greater than or equal to about 0 mol% and less than or equal to about 40 mol%, for example greater than or equal to about 0 mol% and less than about 30 mol%, greater than or equal to about 0 mol% and less than or equal to about 20 mol%, about 0 mol% to about 15 mol%, about 0 mol% to about 10 mol%, or about 0.1 mol% to about 5 mol%.

In the positive active material precursor, when the core and the shell have the same nickel or manganese concentration difference, the compositions of the core and the shell in the positive active material are not mixed up, but the pillared structure is maintained in the shell alone, securing structural stability of the positive active material and thus improving capacity characteristics and cycle-life characteristics of a battery.

In the shell, a content of the pillar elements may be about 1 mol% to about 7 mol% based on the total metal content in the shell, for example, about 2 mol% to about 7 mol%, about 3 mol% to about 7 mol%, or about 4 mol% to about 7 mol%. Herein, the positive active material precursor may maintain a stable structure and improve capacity characteristics and cycle-life characteristics.

For example, the core may include a nickel-manganese-based composite hydroxide represented by Chemical Formula 1, and the shell may include a nickel-manganese-based composite hydroxide represented by Chemical Formula 2.

[Chemical Formula 1] Niₐ₁Mn_{b1}M¹(_{1-a1-b1)}(OH)₂

In Chemical Formula 1, M¹ is at least one element selected from the group consisting of B, Ba, Ca, Ce, Cr, Cu, F, Fe, Mg, Nb, P, S, Si, Sr, and V, 0.6≤a1<1, and 0<b1≤0.4.

[Chemical Formula 2] Niₓ₁Mn_{y1}M²_{z1}M³_{(1-x1-y1-z1)}(OH)₂

In Chemical Formula 2, M² is at least one pillar element selected from Al, Mo, Ti, W, and Zr, and M³ is at least one element selected from the group consisting of B, Ba, Ca, Ce, Cr, Cu, F, Fe, Mg, Nb, P, S, Si, Sr, and V, 0.6≤x1<0.99, 0<y1≤0.39, and 0.01≤z1≤0.07.

On the other hand, Chemical Formulae 1 and 2 satisfy |a1-x1|≤0.4, and |b1-y1|≤0.4. For example, |a1-x1|≤0.3, |a1-x1|≤0.2, |a1-x1|≤0.1, or |a1-x1|≤0.05, or for example, 0≤|a1-x1|≤0.2. In addition, for example, |b1-y1|≤0.3, |b1-y1|≤0.2, |b1-y1|≤0.1, or |b1-y1|≤0.05, or for example, 0≤|b1-y1|≤0.2. In other words, the nickel concentration difference in the core and the shell may be less than or equal to about 40 mol%, for example, less than or equal to about 30 mol%, less than or equal to about 20 mol%, less than or equal to about 15 mol%, less than or equal to about 10 mol%, or less than or equal to about 5 mol%, or for example, about 0 mol% to about 20 mol%. In addition, the manganese concentration difference in the core and the shell may be less than or equal to about 40 mol%, for example, less than or equal to about 30 mol%, less than or equal to about 20 mol%, less than or equal to about 15 mol%, less than or equal to about 10 mol%, or less than or equal to about 5 mol%, or for example, about 0 mol% to about 20 mol%. When these ranges are satisfied, the compositions of the core and the shell in the positive active material are not mixed up, but the pillared structure is located in the shell alone, securing structural stability and thereby, improving capacity characteristics and cycle-life characteristics of a battery.

In Chemical Formula 1, 0.6≤a1<1 and 0<b1≤0.4, for example,0.7≤a1<1 and 0<b1≤0.3 0.8≤a1<1 and 0<b1≤0.2, 0.9≤a1<1 and 0<b1≤0.1, 0.6≤a1≤0.9 and 0.1≤b1≤0.4, or the like, and M¹ may be a doping element in the core.

In Chemical Formula 2, z1 indicates a content of the pillar element in the shell, 0.01≤z1≤0.07, 0.02≤z1≤0.07, 0.03≤z1≤0.07, or 0.04≤z1≤0.07. In Chemical Formula 2, when z1 satisfies the ranges, the positive active material precursor may secure stability of the layered structure and thus improve capacity characteristics, cycle-life characteristics, and the like of a battery. In other words, in Chemical Formula 2, 0.6≤x1<0.99, 0<y1≤0.39, and 0.01 ≤z1≤0.07, for example, 0.6≤x1<0.98, 0<y1≤0.38, and 0.02≤z1≤0.07, 0.6≤x1<0.97, 0<y1≤0.37, and 0.03≤z1≤0.07, 0.6≤x1<0.96, 0<y1≤0.36, and 0.04≤z1≤0.07, 0.6≤x1≤0.89, 0.1≤y1≤0.39, and 0.01 ≤z1≤0.07, or the like. In Chemical Formula 2, M³ may be a doping element in the shell.

The positive active material precursor may have a spherical or substantially spherical shape. The positive active material precursor may maintain a sphere shape in the positive active material after the firing. The positive active material precursor has a sphere shape and thus may not be broken or collapsed even after the repeated charges and discharges but maintain a stable shape and thus exhibit low sheet resistance.

The positive active material precursor may have an average particle diameter (D50) of, for example, about 8µm to about 15µm, about 9µm to about 14µm, or about 10µm to about 13µm without a particular limit. Within the ranges, the positive active material precursor may exhibit high capacity and a high energy density. The average particle diameter may be measured by a particle size analyzer, and mean the diameter of particles having a cumulative volume of 50 volume% in the particle size distribution.

In the positive active material precursor, the core-shell particle may be in the form of secondary particles in which a plurality of primary particles is agglomerated. This positive active material precursor may minimize migration resistance of lithium ions and thus reduce resistance and improve cycle-life characteristics.

On the other hand, the positive active material precursor includes no cobalt or includes the cobalt in an amount of less than or equal to about 2 mol%, less than or equal to about 1 mol%, or less than or equal to about 0.1 mol% based on the total metal content but is not limited thereto. For example, the core may contain 0 mol% to 1 mol%, or 0 mol% to 0.5 mol% of cobalt based on the total metal content of the core.

### Method of Preparing Positive Active Material

In an embodiment, a method of preparing a positive active material for a rechargeable lithium battery includes mixing the aforementioned positive active material precursor with a lithium raw material and performing heat treatment.

The lithium raw material may be, for example, Li₂CO₃, LiOH, a hydrate thereof, or a combination thereof as a lithium source of the positive active material.

A ratio of the number of moles of lithium in the lithium raw material to the number of moles of metal in the positive active material precursor may be, for example, greater than or equal to about 0.8, greater than or equal to about 0.85, greater than or equal to about 0.9, greater than or equal to about 0.95, or greater than or equal to about 1.0 and less than or equal to about 1.8, less than or equal to about 1.2, less than or equal to about 1.1, or less than or equal to about 1.05. The heat treatment may be performed under an oxidizing gas atmosphere, for example, an oxygen atmosphere or an air atmosphere. In addition, the heat treatment may be performed, for example, about 700 °C to about 1000 °C, or about 750 °C to about 900 °C and for example, for about 5 hours to about 15 hours.

### Positive Active Material

In an embodiment, a positive active material for a rechargeable lithium battery in a form of a core-shell particle includes a core and a shell surrounding the core, wherein the core includes a lithium-nickel-manganese-based composite oxide containing lithium, nickel, and manganese, the shell includes a lithium-nickel-manganese-based composite oxide containing lithium, nickel, manganese, and a pillar element, the pillar element includes at least one selected from the group consisting of Al, Mo, Ti, W, and Zr.

The above positive active material precursor is used to prepare a positive active material well maintaining the core-shell structure so that the compositions of the core and the shell may not be mixed up, but the pillared structure may be present in the shell alone but not or in a very small amount present in the core. The positive active material with this structure has a nickel-manganese-based layered structure including no cobalt or a trace amount of cobalt and thus may maintain a very stable structure even after repeated charges and discharges and thus realize high capacity and excellent cycle-life characteristics.

A content of the pillar element included in the shell in the positive active material may be about 1 mol% to about 7 mol%, for example, about 2 mol% to about 7 mol%, about 3 mol% to about 7 mol%, or about 4 mol% to about 7 mol% based on the total content of metals excluding lithium in the shell. On the contrary, a content of the pillar element included in the core may be about 0 mol% to less than about 2 mol%, for example, about 0 mol% to less than about 1 mol%, about 0 mol% to about 0.9 mol%, about 0 mol% to about 0.7 mol%, about 0 mol% to about 0.5 mol%, about 0 mol% to about 0.3 mol%, about 0 mol% to about 0.1 mol%, about 0.1 mol% to about 0.9 mol%, or the like, based on the total content of metals excluding lithium in the core. In other words, the pillar element is not present or included in a trace amount in the core. When the pillar element is uniformly distributed in the positive active material, the pillar element may not actually serve as a pillar and insufficiently suppress the layered structure from collapse during the long cycle or high voltage driving, but the positive active material according to an embodiment has a pillared structure formed in the shell portion and thus keeps the structure stable without cracks or collapse even under severe conditions, accordingly, realizing excellent cycle-life characteristics and capacity characteristics.

A value obtained by subtracting a content of the pillar element in the core from the content of the pillar element in the shell may be about 1 mol% to about 7 mol%.

In the positive active material, a thickness of the shell is not thinner than that of a conventional positive active material with a core-shell structure but about 20% to about 50% of a core-shell particle radius, for example, about 20% to about 45%, about 20% to about 40%, about 25% to about 35%, about 30% to about 50%, about 33% to about 50%, or the like. In other words, the pillared structure may be present from the surface of the positive active material to a thickness corresponding to about 20% to about 50% of the particle radius. When the shell thickness is further thinner or further thicker than the above thickness, the structural collapse according to the charges and discharges may not be effectively suppressed. For example, when the shell thickness is less than about 20%, the compositions of the core and the shell in the positive active material are mixed up and uniform, wherein the pillar elements may not serve as pillars. On the other hand, when the shell thickness satisfies the above range, the nickel-manganese-based layered structure may be stably maintained even during a long-term cycle, and accordingly, capacity characteristics and cycle-life characteristics may be improved.

In the positive active material, a nickel concentration of the core may be substantially equal or similar to that of the shell, and also, a manganese concentration of the core also may be substantially equal or similar to that of the shell. This positive active material is distinguished from a conventional positive active material in which a nickel-rich layer or a manganese-rich layer is, for example, formed on the surface or inside of the active material. The aforementioned positive active material precursor may be used to realize a positive active material having similar nickel and manganese concentrations between the core and the shell but the pillar elements in the shell alone. When there is a large difference in the nickel or manganese concentration of the core and the shell of the positive active material, the compositions of the core and the shell are mixed up and make the active material have a uniform composition, wherein the pillar elements may not serve as pillars. On the contrary, the positive active material according to an embodiment has similar nickel and manganese concentrations between the core and the shell and no composition mixed-up and thus well maintains a core-shell structure but has the pillared structure in the shell alone so that the pillar elements may serve as pillars.

Specifically, a difference between a molar concentration of nickel based on the total metal excluding lithium in the core and a molar concentration of nickel based on the total metal excluding lithium in the shell may greater than or equal to about 0 mol% and less than or equal to about 10 mol%, for example greater than or equal to about 0 mol% and less than about 10 mol%, about 0 mol% to about 9 mol%, about 0 mol% to about 8 mol%, about 0 mol% to about 7 mol%, or about 0.1 mol% to about 6 mol%.

In addition, a difference between a molar concentration of manganese based on the total metal excluding lithium in the core and the molar concentration of manganese based on the total metal excluding lithium in the shell may be greater than or equal to about 0 mol% and less than or equal to about 5 mol%, for example greater than or equal to about 0 mol% and less than 5 mol%, about 0 mol% to about 4 mol%, about 0 mol% to about 3 mol%, about 0 mol% to about 2 mol%, or about 0.1 mol% to about 1.5 mol%.

When the positive active material has a nickel or manganese concentration difference between the core and the shell, the compositions of the core and the shell in the positive active material may not be mixed up but maintain the pillared structure in the shell alone, accordingly, securing structure stability and thus improving capacity characteristics and cycle-life characteristics of a battery.

In the positive active material according to the embodiment, the core may include a lithium-nickel-manganese-based composite oxide represented by Chemical Formula 11, and the shell may include a lithium-nickel-manganese-based composite oxide represented by Chemical Formula 12.

[Chemical Formula 11] LiNiₐMn_{b}M¹¹_{c}M¹²_{(1-a-b-c)}O₂

In Chemical Formula 11, M¹¹ is a pillar element that is at least one selected from the group consisting of Al, Mo, Ti, W, and Zr, M¹² is at least one element selected from the group consisting of B, Ba, Ca, Ce, Cr, Cu, F, Fe, Mg, Nb, P, S, Si, Sr, and V, 0.6≤a<1, O<b≤0.4, and 0≤c<0.02.

[Chemical Formula 12] LiNiₓMn_{y}M¹³_{z}M¹⁴_{(1-x-y-z)}O₂

In Chemical Formula 12, M¹³ is a pillar element that is at least one selected from the group consisting of Al, Mo, Ti, W, and Zr, M¹⁴ is at least one element selected from the group consisting of B, Ba, Ca, Ce, Cr, Cu, F, Fe, Mg, Nb, P, S, Si, Sr, and V, 0.6≤x<0.99, 0<y≤0.39, and 0.01≤z≤0.07.

In Chemical Formula 11 and Chemical Formula 12, |a-x|≤0.1, and |by|≤0.05. For example, |a-x|≤0.1, |a-x|≤0.09, |a-x|≤0.08, |a-x|≤0.07, or |ax|≤0.06, for example, 0≤|a-x|≤0.1 or 0<|a-x|≤0.1. In addition, for example, |by|≤0.05, |b-y|≤0.04, |b-y|≤0.03, |b-y|≤0.02, or |b-y|≤0.015, for example, 0≤|by|≤0.05 or 0<|b-y|≤0.05. In other words, a nickel concentration difference between the core and the shell may be less than or equal to about 10 mol%, for example, less than or equal to about 9 mol%, less than or equal to about 8 mol%, less than or equal to about 7 mol%, or less than or equal to about 6 mol%, for example, about 0 mol% to about 10 mol%. In addition, the manganese concentration difference between the core and the shell may be less than or equal to about 5 mol%, for example, less than or equal to about 4 mol%, less than or equal to about 3 mol%, less than or equal to about 2 mol%, or less than or equal to about 1.5 mol%, for example, about 0 mol% to about 5 mol%. When the ranges are satisfied, the compositions of the core and the shell in the positive active material are not mixed, but the pillared structure is located in the shell alone, securing stability of the structure and thus improving capacity characteristics and cycle-life characteristics of a battery.

In Chemical Formula 11, 0.6≤a<1, O<b≤0.4, and 0≤c<0.02, for example, 0.7≤a<1, 0<b≤0.3, and 0≤c<0.02, 0.8a<1, 0<b≤0.2, and 0≤c<0.02, 0.9≤a<1, 0<b≤0.1, and 0≤c<0.02, 0.6≤a≤0.9, 0.1≤b≤0.4, and 0≤c<0.02, or the like. In addition, for example, 0≤c<0.01 or 0<c<0.01.

In Chemical Formula 12, z indicates a content of the pillar element in the shell, 0.01≤z≤0.07, 0.02≤z≤0.07, 0.03≤z≤0.07, or 0.04≤z≤0.07. When z in Chemical Formula 12 satisfies the ranges, the positive active material may secure stability of the layered structure and thus improve capacity characteristics, cycle-life characteristics, and the like of a battery. In other words, in Chemical Formula 12, 0.6≤x<0.99, 0<y≤0.39, and 0.01≤z≤0.07, for example, 0.6≤x<0.98, 0<y≤0.38, and 0.02≤z≤0.07, 0.6≤x<0.97, 0<y≤0.37, and 0.03≤z≤0.07, 0.6≤x<0.96, 0<y≤0.36, and 0.04≤z≤0.07, 0.6≤x≤0.89, 0.1≤y≤0.39, and 0.01≤z≤0.07, or the like.

The positive active material may have a spherical or substantially spherical shape. Accordingly, the positive active material may not be broken or collapsed but maintain a stable shape even after repeated charges and discharges and exhibit low sheet resistance.

The positive active material may, for example, have an average particle diameter (D50) of about 8µm to about 15µm, about 9µm to about 14µm, about 10µm to about 13µm, or the like without a particular limit. Within the ranges, the positive active material may exhibit high capacity and high energy density. The average particle diameter may be measured by a particle size analyzer and mean a diameter of particles having a cumulative volume of 50 volume% in the particle size distribution.

In the positive active material, the core-shell particles may be in the form of secondary particles in which a plurality of primary particles is agglomerated. In addition, the positive active material may include irregular pores inside the core-shell particle. This positive active material may minimize migration resistance of lithium ions and thus reduce resistance and improve cycle-life characteristics.

On the other hand, the positive active material may not contain cobalt or contain less than or equal to about 2 mol%, less than or equal to about 1 mol%, or less than or equal to about 0.1 mol% of cobalt based on the total content of metals in the positive active material but is not limited thereto. For example, the positive active material may be a cobalt-free layered structure positive active material.

### Positive Electrode

In an embodiment, a positive electrode for a rechargeable lithium battery including the aforementioned positive active material is provided. The positive electrode for a rechargeable lithium battery may include a current collector and a positive active material layer on the current collector and the positive active material layer may include a positive active material and may further include a binder and/or a conductive material.

The binder improves binding properties of positive active material particles with one another and with a current collector. Examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The content of the binder in the positive active material layer may be about 1 wt% to about 5 wt% based on the total weight of the positive active material layer.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminium, silver, and the like; a conductive polymer such as a polyphenylene derivative; or a mixture thereof.

The content of the conductive material in the positive active material layer may be about 1 wt% to about 5 wt% based on the total weight of the positive active material layer.

An aluminium foil may be used as the positive current collector, but is not limited thereto.

### Negative Electrode

A negative electrode for a rechargeable lithium battery includes a current collector and a negative active material layer on the current collector. The negative active material layer may include a negative active material, and may further include a binder and/or a conductive material.

The negative active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from the group consisting of Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative active material may include Sn, SnO₂, Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be preferably about 10 nm to about 200 nm. The silicon particles may exist in an oxidized form, and in this case, an atomic content ratio of Si:O in the silicon particles indicating a degree of oxidation may be about 99:1 to about 33:67. The silicon particles may be SiOₓ particles, and in this case, the range of x in SiOₓ may be greater than about 0 and less than about 2. In the present specification, unless otherwise defined, an average particle diameter (D50) indicates the diameter of particles where an accumulated volume is about 50 volume% in a particle size distribution.

The Si-based negative active material or Sn-based negative active material may be mixed with the carbon-based negative active material. When the Si-based negative active material or Sn-based negative active material and the carbon-based negative active material are mixed and used, the mixing ratio may be a weight ratio of about 1:99 to about 90:10.

In the negative active material layer, the negative active material may be included in an amount of about 95 wt% to about 99 wt% based on the total weight of the negative active material layer.

In an embodiment, the negative active material layer further includes a binder, and may optionally further include a conductive material. The content of the binder in the negative active material layer may be about 1 wt% to about 5 wt% based on the total weight of the negative active material layer. In addition, when the conductive material is further included, the negative active material layer may include about 90 wt% to about 98 wt% of the negative active material, about 1 wt% to about 5 wt% of the binder, and about 1 wt% to about 5 wt% of the conductive material.

The binder serves to well adhere the negative active material particles to each other and also to adhere the negative active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included as a thickener. As the cellulose-based compound, one or more of carboxymethyl cellulose, hydroxypropylmethyl cellulose, methyl cellulose, or alkali metal salts thereof may be mixed and used. As the alkali metal, Na, K, or Li may be used. The amount of the thickener used may be about 0.1 parts by weight to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminium silver, and the like; a conductive polymer such as a polyphenylene derivative; or a mixture thereof.

The negative current collector may include one selected from a copper foil, a nickel foil, a stainless steel foil, a titanium foil, a nickel foam, a copper foam, a polymer substrate coated with a conductive metal, and a combination thereof.

### Rechargeable Lithium Battery

In an embodiment, a rechargeable lithium battery includes a positive electrode including the aforementioned positive active material and negative electrode, a separator between the positive electrode and the negative electrode, and an electrolyte.

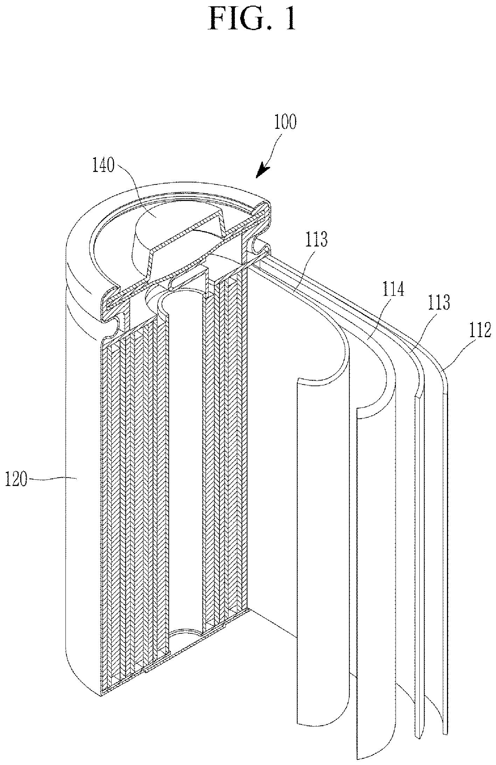

FIG. 1 is a schematic view illustrating a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, the negative electrode 112, and the separator 113, a battery case 120 housing the battery cell, and a sealing member 140 sealing the battery case 120.

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

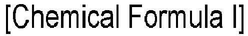

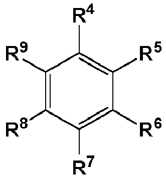

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula II as an additive in order to improve cycle-life of a battery.

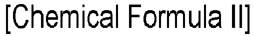

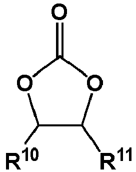

In Chemical Formula II, R¹⁰ and R¹¹ are the same or different, and are selected from hydrogen, a halogen, a cyano group, a nitro group, and fluorinated C1 to C5 alkyl group, provided that at least one of R¹⁰ and R¹¹ is selected from a halogen, a cyano group, a nitro group, and fluorinated C1 to C5 alkyl group, but both of R¹⁰ and R¹¹ are not hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF₄, LiSbF₆, LiASF₆, LiN(SO₂C₂F₅)₂, Li(CF₃SO₂)₂N, LiN(SO₃C₂F₅)₂, Li(FSO₂)₂N (lithium bis(fluorosulfonyl)imide): LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCI, Lil, LiB(C₂O₄)₂ (lithium bis(oxalato) borate, LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, the separator may be selected from a glass fiber, polyester, Teflon, polyethylene, polypropylene, polytetrafluoroethylene, or a combination thereof. It may have a form of a non-woven fabric or a woven fabric. For example, in a lithium ion battery, a polyolefin-based polymer separator such as polyethylene separator and polypropylene separator is mainly used. In order to ensure the heat resistance or mechanical strength, a coated separator including a ceramic component or a polymer material may be used. Optionally, it may have a mono-layered or multi-layered structure.

Rechargeable lithium batteries may be classified as lithium ion batteries, lithium ion polymer batteries, and lithium polymer batteries according to the presence of a separator and the type of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art.

The rechargeable lithium battery according to an embodiment may be used in an electric vehicle (EV), a hybrid electric vehicle such as a plug-in hybrid electric vehicle (PHEV), and portable electronic device because it implements a high capacity and has excellent storage stability, cycle-life characteristics, and high rate characteristics at high temperatures.

Hereinafter, examples of the present disclosure and comparative examples are described. It is to be understood, however, that the examples are for the purpose of illustration and are not to be construed as limiting the present invention.

### Example 1

### (1) Preparation of Positive Active Material Precursor

A core is synthesized by using nickel sulfate and manganese sulfate as metal raw materials in a co-precipitation method. First, ammonia water with a concentration of 0.4 mol/L is added to a reactor. The metal raw materials at 9 L/hr and ammonia water at 1 L/hr are simultaneously injected at a stirring power of 3.5 kW/m' at 40 °C. Subsequently, NaOH is added thereto to maintain pH. A reaction is performed within a range of pH 11.0 to pH 12.0 for 16 hours or more, synthesizing a core of Ni_{0.80}Mn_{0.20}(OH)₂.

Subsequently, a shell surrounding the core is synthesized by using nickel sulfate, manganese sulfate, and aluminium hydroxide as metal raw materials. Into the obtained core, the metal raw materials at 5 L/hr and ammonia water at 0.5 L/hr are simultaneously injected. Subsequently, NaOH is injected thereinto and then, reacted therewith within a range of pH 11.0 to 12.0 for 6 hours, synthesizing a shell of Ni_{0.70}Mn_{0.25}Al_{0.05}(OH)₂ according to Example 1.

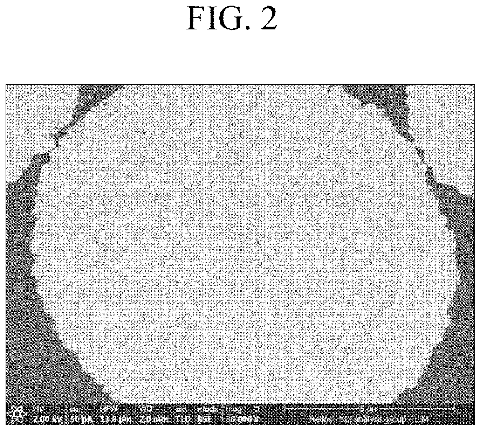

A reaction product therefrom is washed and then, hot air-dried at about 150 °C for 24 hours, preparing a positive active material precursor having a core-shell structure and an average particle diameter (D50) of about 12 µm. FIG. 2 is a scanning electron microscope photograph of a cross-section of the positive active material precursor prepared in Example 1. Referring to FIG. 2, the synthesized positive active material precursor has a spherical-shaped core-shell structure and a shell thickness within a range of 20% to 50% of the core-shell particle radius.

### (2) Preparation of Positive Active Material

A positive active material with a core-shell structure is synthesized by mixing the obtained positive active material precursor and lithium hydroxide in a mole ratio of 1:1 and heat-treating the mixture under an oxygen atmosphere at about 800 °C for 6 hours.

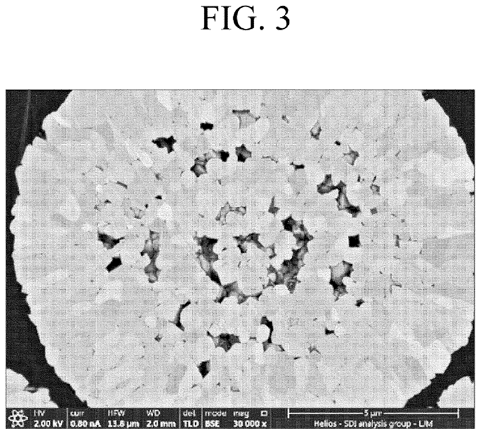

FIG. 3 is a scanning electron microscope photograph showing a cross-section of the positive active material prepared in Example 1. Referring to FIG. 3, the synthesized positive active material has a spherical shaped core-shell structure and a shell thickness within a range of 20% to 50% of the core-shell particle radius.

### (3) Manufacture of Positive Electrode

95 wt% of the obtained positive active material, 3 wt% of a polyvinylidene fluoride binder, and 2 wt% of a carbon nanotube conductive material are mixed in an N-methylpyrrolidone solvent, preparing positive active material slurry. The positive active material slurry is coated on an aluminium current collector and then, dried and compressed, preparing a positive electrode.

### (4) Manufacture of Rechargeable Lithium Battery Cell

A coin half-cell is manufactured by disposing a separator having a polyethylene polypropylene multilayer structure between the manufactured positive electrode and a lithium metal counter electrode and injecting an electrolyte solution in which 1.0 M LiPF₆ lithium salt was added to a solvent in which ethylene carbonate and diethyl carbonate are mixed in a volume ratio of 50:50.

### Comparative Example 1

A positive active material precursor, a positive active material, a positive electrode, and a battery cell are prepared according to the same method as Example 1 except that a shell of a Ni_{0.70}Mn_{0.30}(OH)₂ composition is formed without using an aluminium raw material during the manufacture of the positive active material precursor.

### Comparative Example 2

A positive active material precursor is prepared according to the same method as Comparative Example 1, and then, a positive active material, a positive electrode, and a battery cell are manufactured according to the same method as Comparative Example 1 except that when the positive active material precursor and lithium hydroxide are mixed, 5 mol% of aluminium oxide is added thereto based on the total amount of the positive active material precursor.

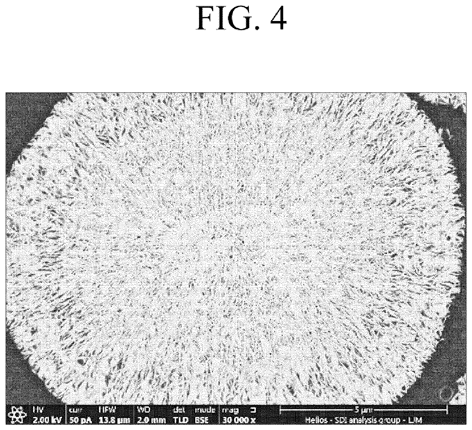

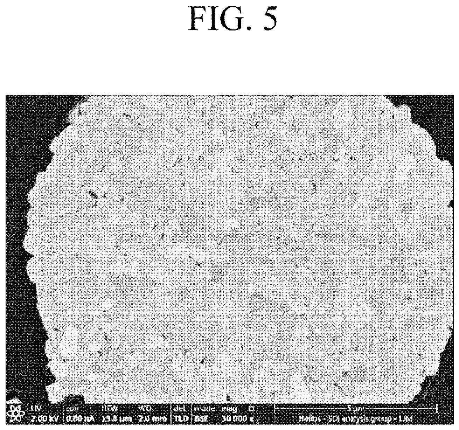

FIG. 4 is a scanning electron microscope photograph of a cross-section of the positive active material precursor of Comparative Example 2, and FIG. 5 is a scanning electron microscope photograph of a cross-section of the positive active material of Comparative Example 2. Referring to FIGS. 4 and 5, the core-shell structure of the positive active material of FIG. 5 is not well maintained, and aluminium is uniformly distributed inside the positive active material regardless of the core and the shell.

### Evaluation Example 1: Element Analysis

The positive active materials synthesized according to Example 1 and Comparative Examples 1 and 2 are analyzed with respect to components of the core and the shell and contents thereof through inductively coupled plasma (ICP) spectroscopic analysis of the cross-section of the positive active material, and the results are shown in Table 1. In Table 1, a unit of each value is mol%.

**(Table 1)**

| | | Comparative Example 1 | | I Example 1 | | Comparative Example 2 | |
|---|---|---|---|---|---|---|---|
| | | core | shell | core | shell | core | shell |
| Composition (mol%) | Ni | 80 | 70 | 78 | 72 | 76 | 75 |
| | Mn | 20 | 30 | 21.9 | 23 | 20 | 20 |
| | Al | - | - | 0.1 | 5 | 4 | 5 |

Referring to Table 1, the positive active material of Example 1 includes a pillar element of Al in a trace amount of 1 mol% or less in the core and in an amount of about 5 mol% in the shell. In addition, in Example 1, a nickel concentration difference between the core and the shell is 6 mol% or so, and a manganese concentration difference between the core and the shell is 1.1 mol% or so. On the other hand, the positive active material of Comparative Example 2 includes aluminium uniformly distributed almost in the same amount in the core and the shell and thus has no nickel concentration difference between the core and the shell and also no manganese concentration difference between the core and the shell.

### Evaluation Example 2: High-temperature Cycle-life Characteristics

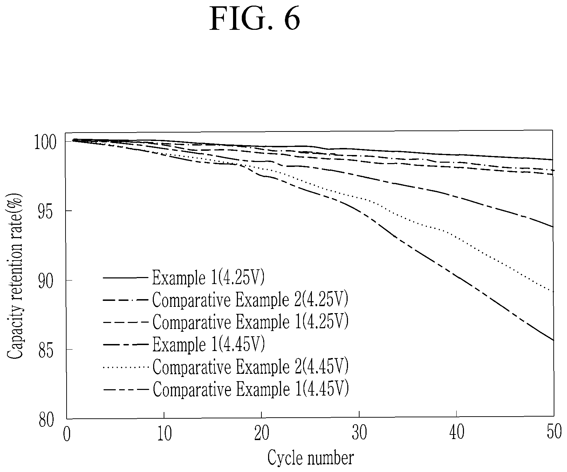

Coin half-cells according to Example 1 and Comparative Examples 1 and 2 are charged at a constant current (0.2 C) and a constant voltage (4.25 V, cutoff at 0.05 C), paused for 10 minutes, and discharged to 3.0 V at a constant current (0.2 C) to perform initial charge and discharge. Subsequently, the cells are 50 times repeatedly charged and discharged at 1 C at 45 °C to measure discharge capacity, and then, capacity retention ratio is evaluated by a ratio(%) of the 50^{th} discharge capacity relative to the initial discharge capacity, which are shown in FIG. 6 and Table 2.

In addition, cycle-life characteristics of the cells are evaluated, when charged under the same other conditions but at a constant voltage of 4.45 V, and the results are shown in FIG. 6 and Table 2.

**(Table 2)**

| 50th high-temperature cycle-life (%) | Example 1 | Comparative Example 1 | Comparative Example 2 |
|---|---|---|---|
| 4.25 V | 98.4 | 97.3 | 97.6 |
| 4.45 V | 93.3 | 84.3 | 88.9 |

Referring to Table 2 and FIG. 6, when charged at 4.25 V, the cell according to Example 1 exhibits relatively excellent cycle-life characteristics, compared with the cells according to Comparative Examples 1 and 2, and when charged at 4.45 V, Example 1 exhibits significantly excellent cycle-life characteristics, compared with the cells according to Comparative Examples 1 and 2.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of Symbols>**

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A positive active material precursor for a rechargeable lithium battery in a form of a core-shell particle comprising a core and a shell surrounding the core,
wherein the core includes a nickel-manganese-based composite hydroxide containing nickel and manganese,
the shell includes a nickel-manganese-based composite hydroxide containing nickel, manganese, and a pillar element, and the pillar element includes at least one selected from the group consisting of Al, Mo, Ti, W, and Zr.

2. The positive active material precursor of claim 1, wherein the core does not contain the pillar element.

3. The positive active material precursor of claim 1 or claim 2, wherein the core contains 0 mol% to 1 mol% of cobalt based on the total metal content of the core.

4. The positive active material precursor of any one of claims 1 to 3, wherein a content of the pillar element in the shell ranges from 1 mol% to 7 mol% based on 100 mol% of the total metal in the shell.

5. The positive active material precursor of any one of claims 1 to 4, wherein a thickness of the shell is 20% to 50% of a radius of the core-shell particle.

6. The positive active material precursor of any one of claims 1 to 5, wherein:
(i) a difference between a molar concentration of nickel based on the total metal in the core and a molar concentration of nickel based on the total metal in the shell is greater than or equal to 0 mol% and less than or equal to 40 mol%, and
a difference between a molar concentration of manganese based on the total metal in the core and a molar concentration of manganese based on the total metal in the shell is greater than or equal to 0 mol% and less than or equal to 40 mol%; or
(ii) a difference between a molar concentration of nickel based on the total metal in the core and a molar concentration of nickel based on the total metal in the shell is greater than or equal to 0 mol% and less than or equal to 20 mol%, and
a difference between a molar concentration of manganese based on the total metal in the core and a molar concentration of manganese based on the total metal in the shell is greater than or equal to 0 mol% and less than or equal to 20 mol%.

7. The positive active material precursor of any one of claims 1 to 6, wherein
the core includes a nickel-manganese-based composite hydroxide represented by Chemical Formula 1,
the shell includes a nickel-manganese-based composite hydroxide represented by Chemical Formula 2:
[Chemical Formula 1] Niₐ₁Mn_{b1}M1_{(1-a1-b1)}(OH)₂
wherein, in Chemical Formula 1, M¹ is at least one element selected from the group consisting of B, Ba, Ca, Ce, Cr, Cu, F, Fe, Mg, Nb, P, S, Si, Sr, and V, 0.6≤a1<1, and 0<b1≤0.4,
[Chemical Formula 2] Niₓ₁Mn_{y1}M²_{z1}M³_{(1-x1-y1-z1)}(OH)₂
wherein, in Chemical Formula 2, M² is at least one pillar element selected from the group consisting of Al, Mo, Ti, W, and Zr, and M³ is at least one element selected from the group consisting of B, Ba, Ca, Ce, Cr, Cu, F, Fe, Mg, Nb, P, S, Si, Sr, and V, 0.6≤x1<0.99, 0<y1≤0.39, and 0.01≤z1≤0.07, and
in Chemical Formula 1 and Chemical Formula 2, |a1-x1|≤0.4 and |b1-y1|≤0.4, optionally wherein in Chemical Formula 2, 0.6≤x1<0.96, 0<y1≤0.36, and 0.04≤z1≤0.07.

8. The positive active material precursor of any one of claims 1 to 7, wherein:
(i) the positive active material precursor has a spherical shape; and/or
(ii) the positive active material precursor has an average particle diameter (D50) of 8µm to 15µm; and/or
(iii) in the positive active material precursor, the core-shell particle is in the form of secondary particles in which a plurality of primary particles is agglomerated.

9. A method of preparing a positive active material for a rechargeable lithium battery, comprising mixing the positive active material precursor of any one of claims 1 to 8 with a lithium raw material and performing heat treatment.

10. A positive active material for a rechargeable lithium battery in a form of a core-shell particle, comprising
a core and a shell surrounding the core,
the core includes a lithium-nickel-manganese-based composite oxide containing lithium, nickel and manganese, and
the shell includes a lithium-nickel-manganese-based composite oxide containing lithium, nickel, manganese and a pillar element, wherein the pillar element includes at least one selected from the group consisting of Al, Mo, Ti, W, and Zr.

11. The positive active material of claim 10, wherein the core contains the pillar element including at least one selected from the group consisting of Al, Mo, Ti, W, and Zr in an amount of 0 mol% to less than 2 mol% based on 100 mol% of metals excluding lithium in the core.

12. The positive active material of claim 10 or claim 11, wherein the shell includes the pillar element in an amount of 1 mol% to 7 mol% based on 100 mol% of metals excluding lithium in the shell.

13. The positive active material of any one of claims 10 to 12, wherein a value obtained by subtracting a content of the pillar element in the core from the content of the pillar element in the shell is 1 mol% to 7 mol%.

14. The positive active material of any one of claims 10 to 13, wherein a thickness of the shell is 20% to 50% of a radius of the core-shell particle.

15. The positive active material of any one of claims 10 to 14, wherein
a difference between a molar concentration of nickel based on the total metal excluding lithium in the core and a molar concentration of nickel based on the total metal excluding lithium in the shell is greater than or equal to 0 mol% and less than or equal to 10 mol%, and
a difference between a molar concentration of manganese based on the total metal excluding lithium in the core and the molar concentration of manganese based on the total metal excluding lithium in the shell is greater than or equal to 0 mol% and less than or equal to 5 mol%.

16. The positive active material of any one of claims 10 to 15, wherein
the core includes a lithium-nickel-manganese-based composite oxide represented by Chemical Formula 11, and
the shell includes a lithium-nickel-manganese-based composite oxide represented by Chemical Formula 12:
[Chemical Formula 11] LiNiₐMn_{b}M¹¹_{c}M¹²_{(1-a-b-c)}O₂
wherein, in Chemical Formula 11, M¹¹ is a pillar element that is at least one selected from the group consisting of Al, Mo, Ti, W, and Zr, M¹² is at least one element selected from the group consisting of B, Ba, Ca, Ce, Cr, Cu, F, Fe, Mg, Nb, P, S, Si, Sr, and V, 0.6≤a<1, O<b≤0.4, and 0≤c<0.02,
[Chemical Formula 12] LiNiₓMn_{y}M¹³_{z}M¹⁴_{(1-x-y-z)}O₂
wherein, in Chemical Formula 12, M¹³ is a pillar element that is at least one selected from the group consisting of Al, Mo, Ti, W, and Zr, M¹⁴ is at least one element selected from the group consisting of B, Ba, Ca, Ce, Cr, Cu, F, Fe, Mg, Nb, P, S, Si, Sr, and V, 0.6≤x<0.99, 0<y≤0.39, and 0.01≤z≤0.07,
wherein, in Chemical Formula 11 and Chemical Formula 12, |a-x|≤0.1 and |b-y|≤0.05, optionally wherein in Chemical Formula 12, 0.6≤x<0.96, 0<y≤0.36, and 0.04≤z≤0.07.

17. The positive active material of any one of claims 10 to 16, wherein:
(i) the positive active material has a spherical shape; and/or
(ii) an average particle diameter (D50) of the positive active material is 8µm to 15µm; and/or
(iii) in the positive active material, the core-shell particle is in the form of secondary particles in which a plurality of primary particles is agglomerated; and/or
(iv) the positive active material contains 0 mol% to 2 mol% of cobalt based on the total content of metals of the positive active material.
